# EUROPÄISCHE PATENTSCHRIFT

(11) **EP 2 321 206 B1**
(45) Veröffentlichungstag und Bekanntmachung des Hinweises auf die Patenterteilung: **19.06.2013**
(21) Anmeldenummer: 09781254.9
(22) Anmeldetag: 29.07.2009
(51) Int. Cl.: B65G 47/51, B65G 47/57

(54) **ZWISCHENSPEICHER UND VERFAHREN ZUM BETRIEB EINES SOLCHEN ZWISCHENSPEICHERS**
BUFFER STORE AND METHOD FOR THE OPERATION OF SUCH A BUFFER STORE
DISPOSITIF DE STOCKAGE INTERMÉDIAIRE ET PROCÉDÉ POUR SON FONCTIONNEMENT

(30) Priorität: 29.07.2008 CH 11912008
(43) Veröffentlichungstag der Anmeldung: 18.05.2011
(73) Patentinhaber: Rotzinger AG, 4303 Kaiseraugst (CH)
(72) Erfinder: PHILIPP, Kurt, 79639 Grenzach-Wyhlen (DE)
(74) Vertreter: Braun, André jr.
(86) Internationale Anmeldenummer: PCT/EP2009/059828
(87) Internationale Veröffentlichungsnummer: WO 2010/012788

(56) Entgegenhaltungen:
- EP-A- 0 534 902
- WO-A1-2004/067412
- WO-A1-2005/021410
- US-A- 1 901 928
- US-A- 3 520 396

## Beschreibung

Die Erfindung betrifft einen zwischenspeicher gemäss dem Oberbegriff des Patentanspruchs 1 sowie ein Verfahren zum Betrieb eines solchen Zwischenspeichers. Ein solcher Zwischenspeicher ist aus dem Dokument EP φ 534 9φ2 A1 bekannt.

Bei den Produkten kann es sich beispielsweise um Schokoladentafeln handeln, die von einer Produktionsvorrichtung zu mindestens einer Verpackungsvorrichtung gefördert werden. Die Gegenstände können jedoch statt aus Schokoladentafeln aus anderen stückförmigen, süssen oder nicht-süssen Nahrungsmitteln, zum Beispiel Gebäckstücken, oder aus Dosen oder sonstigen Behältern mit irgendeiner Füllung oder aus Bauteilen für den Maschinenbau, zum Beispiel Kugellagern, bestehen, die zu einer Verpackungsvorrichtung oder sonstigen Bearbeitungsvorrichtung gefördert werden.

Bei bekannten Einrichtungen zur Herstellung und Verpackung von schokoladentafeln werden die von einer Produktionsvorrichtung produzierten Tafeln über eine üblicherweise aus Förderbändern bestehende Zufuhrbahn zu Kettenspeichern, danach durch diese hindurch zu Verpackungsvorrichtungen transportiert. Jeder Kettenspeicher kann zum Beispiel ungefähr gemäss der DE 9012074 U ausgebildet sein und dient als Ausgleichsvorrichtung zum Ausgleichen von Schwankungen der Zufuhrrate von Tafeln oder der Verpackungsrate der Verpackungsvorrichtung sowie von vollständigen, kurzzeitigen Betriebsunterbrüchen der Produktionsvorrichtung oder der verpackungsvorrichtung. Ein derartiger Kettenspeicher besitzt mehrere an zwei endlosen Ketten angehängte Gondeln oder Tablare zur Ablage bzw. Aufnahme je einer Reihe Tafeln. Jede Kette wird durch mehrere in einem Gestell gelagerte Kettenräder und durch mehrere an vertikal verstellbaren Schlitten gelagerte Kettenräder umgelenkt und bildet eine Anzahl von Schleifen.

Im Stand der Technik sind auch Zwischenspeicher mit mehreren langen übereinander angeordneten Bädern bekannt. Dabei werden die übereinander liegenden Bänder mit einem reversierbaren Weichenband beschickt und entleert. Die Produkte werden in Reihen hintereinander auf einer langen Speicherstrecke gespeichert. Ein wesentlicher Nachteil dieser Einrichtung ist der grosse Platzbedarf, da die Bänder Ausdehnungen von mehreren Dutzend Metern erreichen können.

Das Dokument WO 2005/021410 A1 offenbart mehrere zusammenwirkende Förderer, wobei mindestens zwei übereinander angeordnete Beladeförderer und mindestens zwei übereinander angeordnete Entladeförderer vorhanden sind und wobei zwischen den Belade- und Entladeförderem um horizontale Achsen schwenkbare Hilfsförderer angeordnet sind, mittels welchen zu fördernde Objekte von einem ersten oder von einem zweiten Beladeförderer zu einem entsprechenden Entladeförderer förderbar sind. Dadurch soll erreicht werden, dass von einem Beladeförderer herkommende Objekte in effektiver Weise mittels eines Hilfsförderers zu einem der beiden Entladeförderer transferiert werden können. In einer Ausführungsvariante ist der Hilfsfölderer längenverstellbar ausgebildet.

Das Dokument WO 2004/067412 A1 beschreibt einen Förderer mit einem mit Latten besetzten Fördergurt, welcher einen Empfangsbereich und einen Ausgabebereich aufweist, zwischen welchen bspw. Lebensmittel in einer Förderrichtung von Empfangsbereich zum Ausgabebereich förderbar sind, wobei der Förderer aus mehreren Abschnitten gebildet ist, so dass ein Förderabschnitt bei fixiertem Eingangsbereich des Förderers parallel zu einem Förderabschnitt das Ausgangsbereichs desselben verstellbar ist. Der Ausgangsbereich des Förderers ist zudem höhenverstellbar, wobei dazu der Ebrdergut automatisch längenverstellbar ist.

Aus dem Stand der Technik sind des Weiteren Einrichtungen zur Beschickung der Gondeln oder Tablare mit Produkten bekannt. Aus US 1901928 ist bspw. eine Einrichtung bekannt, um regelmässig beabstandete Schalen von einem Horizontalförderer auf einen Vertikalförderer überzuführen, wobei zwischen Horizontalförderer und Vertikalförderer ein um seine stromaufwärtige Umlenkrolle schwenkbares Förderband angeordnet und wobei das Band in regelmässigen Abständen Mitnehmer aufweist. Durch eine starre mechanische Kopplung zwischen Vertikalbewegung des stromabwärtigen Förderbandendes und der Bewegung des Vertikalförderers ist konstanter Abstand zwischen den Tablaren des Vertikalförderers bedingt, welche bei vielen Durchlauf- bzw. Zwischenspeichern nicht erfüllt ist. Aus dem Stand der Technik ist zudem eine Einrichtung zum Zuführen von Produkten gemäss EP 0534902 bekannt, bei welcher die vorgenannte Einrichtung dadurch weitergebildet ist, dass die Bewegung des schwenkbaren Förderbandes unabhängig von der Bewegung des Vertikalförderers möglich ist, so dass die Produktübergabe sowohl im Stillstand des Vertikalförderers als auch in Bewegung desselben möglich ist. Die bekannten Speicherzufuhr-Einrichtungen erweisen sich jedoch als nachteilig im Hinblick darauf, dass durch die Schwenkung des schwenkbaren Förderers dessen stromaufwärtige Bandnase bzw. Förderbandende sich radial um die Schwenkachse bewegt und dabei von den übereinander angeordneten Tablaren in unterschiedlichen Abständen entfernt ist.

Das Dokument US 3520396 A betrifft eine Beladestation zum Beladen von Stückgut auf Transportmittel, wie etwa Schiffe. Mittels eines umschaltbaren Gurtförderers werden die Güter einem Vertikalförderer zugeführt. Der umschaltbare Förderer ist schwenkbar und längenverstellbar ausgebildet und übergibt das Stückgut auf ein mittels des Vertikalförderers nach unten geführten Tablars. Nachteilig wirkt sich bei diesem System aus, dass der umschaltbare Förderer zwar schwenkbar und längenverstellbar ist, doch beschränkt sich die Schwenkung darauf, dem einen Tablar in der Transportgeschwindigkeit des Vertikalförderers in einem kleinen Bereich nachgeführt zu werden. Die bekannten Speicher arbeiten nach dem "first-in - first-out" Prinzip und weisen eine Eingangsstation zur Einspeicherung von Produkten und eine Ausgangsstation zur Abgabe von Produkten auf. Die Ausgangsstation ist der Eingangsstation gegenüberliegend am Speicher angeordnet. Als Nachteil dieser Einrichtungen hat sich erwiesen, dass die eingelagerten Produkte somit den Speicher durchlaufen müssen. Dies hat u.a. zur Folge, dass ein solcher Speicher eine Mindestbefüllung an Produktereihen benötigt. Zudem muss bei Abschluss bzw. Beendigung der Produktion der Speicher relativ lange entleert werden, was unproduktive Standzeiten bei anderen Maschinen zur Folge hat. Funktionsbedingt kann bei einem nach dem "first-in - first-out" Prinzip arbeitenden Speicher auch nur ein Teil der Gondeln zur Einspeicherung von Produkten genutzt werden.

Der vorliegenden Erfindung liegt deshalb die Aufgabe zugrunde, eine Speicherzuführeinrichtung bzw. eine Beschickungs-Einrichtung der eingangs genannten Art so weiterzubilden, dass die Nachteile des Standes der Technik soweit wie möglich vermieden werden, insbesondere, dass der Speicherdurchlauf von Produkten optimiert werden kann.

Eine weitere Aufgabe besteht darin, dass nebst dem Speicher mindestens eine weitere Ablage mit aus der Produktion zugeführten Produkten beschickbar sein soll.

Eine andere Aufgabe der Erfindung besteht darin, die Verpackung von Produkten effizienter zu gestalten, insbesondere eine kontinuierliche Verpackung von Produkten zu gewährleisten.

Diese Aufgaben werden erfindungsgemäss durch einen Zwischenspeicher mit den Merkmalen des Anspruchs 1 sowie ein Verfahren zum Betrieb eines solchen Zwischenspeichers gemäss Anspruch 11, 12 oder 13 gelöst. Vorteilhafte Weiterbildungen des erfindungsgemässen Zwischenspeichers gehen aus den abhängigen Ansprüchen hervor.

Insbesondere werden die Ziele der vorliegenden Erfindung erreicht durch eine Speicherzuführeinrichtung, mit einem Zuführförderer zum Fördern von Produkten in einer Hauptförderrichtung zwischen einem Einlaufende zum Aufnehmen der Produkte und einem Auslaufende zum Abgeben und Zuführen der Produkte zu einem Zwischenspeicher, such bezeichnet als Speichereinrichtung, wobei die Speichereinrichtung mehrere Produkteablagen zum Zwischenspeichern von Produkten aufweist, wobei mindestens zwei endlose Speicherschlaufen der Speichereinrichtung vorhanden sind, mittels welchen die Produkteablagen zwischen einer Eingangsstation zur Aufnahme der zugeführten Produkte und einer Ausgangsstation zur Abgabe der zwischengespeicherten Produkte förderbar sind, wobei die Produkteablagen im Bereich der Eingangsstation zueinander vertikal beabstandet sind und Produkte mittels des schwenkbaren Zuführförderer-Abschnitts an mehrere übereinander angeordnete Produkteablagen zuführbar sind, wobei der Zuführförderer-Abschnitt in Hauptförderrichtung längenverstellbar ausgebildet ist, wobei das Auslaufende des Zuführförderer-Abschnitts längenverstellbaren und schwenkbaren Zuführförderers horizontal und/oder vertikal frei zwischen mehreren Produkteablagen und mindestens einem weiteren als vorübergehende Produkteablage dienenden Förderer positionierbar ist.

Zum Betrieb der Speicherzuführeinrichtung wird das Auslaufende des Zuführförderers mittels der motorisch antreibbaren Umlenkmittel basierend auf Steuer- und/oder Datensignalen der Steuerung in horizontaler und/oder vertikaler Richtung stufenlos positioniert, um Produkte wahlweise auf den Queraustrageförderer, auf eine Produkteablage des Speichers oder auf den Auswurfförderer zu transportieren bzw. abzulegen.

Ebenso kann zum Betrieb der Speicherzuführeinrichtung das Auslaufende des Zuführförderers mittels der motorisch antreibbaren Umlenkmittel basierend auf Steuer- und/oder Datensignalen der Steuerung in horizontaler und/oder vertikaler Richtung stufenlos positioniert werden, um Produkte auf den Förderer abzulegen.

Zudem kann zum Betrieb der Speicherzuführeinrichtung das Auslaufende des Zuführförderers mittels der motorisch antreibbaren Umlenkmittel basierend auf Steuer- und/oder Datensignalen der Steuerung in horizontaler und/oder vertikaler Richtung stufenlos positioniert werden, um Produkte auf mindestens ein Tablar einer Gondel im Speicher abzulegen.

Einer der Vorteile der erfindungsgemässen Einrichtung besteht darin, dass Beschickung der Verpackungsmaschine sowohl aus dem Fluss als auch direkt aus dem Speicher möglich ist. Die freie Positionierbarkeit der Bandnase bzw. des Auslaufendes des Zuführförderers bedeutet, dass die Bandnase nicht nur entlang einem vorgegebenen Kreisbogen um die Drehachse horizontal und/oder vertikal positionierbar ist, sondern stufenlos und in einem gewissen Bereich beliebig ausgerichtet werden kann. Dieser gewisse Bereich kann dergestalt sein, dass mehrere übereinander angeordnete Produkteablagen bei der Eingabestation des Speichers beschickbar sind, bspw. bis sechs Produkteablagen.

Ein weiterer Vorteil besteht darin, dass im Normalfall die Reihen von Produkten auf kürzestem Weg in die Verpackungsmaschine transportierbar sind und nicht wie sonst üblich erst durch den Speicher hindurch geführt werden müssen. Nur bei einem Stopp bzw. Unterbruch der Verpackungsstation werden die Reihen von Produkten in den Speicher eingespeist.

Ein anderer Vorteil der erfindungsgemässen Einrichtung besteht zudem darin, dass eine effiziente Möglichkeit zur Rückführung von Produkten ("re-feed") aus dem Speicher in den laufenden Produktfluss besteht. Somit kann der Speicher auch in den laufenden Produktfluss hinein entleert werden.

Ein weiterer Vorteil besteht darin, dass die Speicherzuführeinrichtung und ein angrenzender Speicher auf kleiner Grundfläche gehalten werden können und dennoch eine hohe Speicherkapazität ermöglichen. Dadurch können Herstellungs- und Standortkosten gegenüber bekannten Einrichtungen und Systemen eingespart werden.

In einer Ausführungsvariante der Erfindung ist der weitere Förderer zum Austragen von Produkten quer zur Hauptförderrichtung des Zuführförderers angeordnet, um die Produkte einer dem Förderer nachgeschalteten Verarbeitungsmaschine, bspw. einer Verpackungsmaschine, zuzuführen. Einer der Vorteile der Erfindung ist, dass die Produkte sowohl vom Zuführförderer, als auch von der Speichereinrichtung durch den Querförderer übernommen werden können, was eine hohe Flexibilität bei der Beschickung der Verpackungsanlage darstellt. Bei der Verpackung von Produkten soll ein steter und ununterbrochener Fluss oder Strom von Produkten der Verpackung zugeführt werden können, was mit der Speicherzuführeinrichtung möglich ist.

In einer anderen Ausführungsvariante der Erfindung umfasst die Speicherzuführeinrichtung einen Zusätzlichen weiteren Förderer, welcher zwischen dem Zuführförderer und der Speichereinrichtung angeordnet ist, um die Produkte vom Zuführförderer oder bei der Ausgangsstation von der Speichereinrichtung zu übernehmen, um die Produkte einer dem Zusätzlichen weiteren Förderer nachgeschalteten Verarbeitungsmaschine, bspw. einer Verarbeitungsstation, zuzuführen. Einer der Vorteile der Erfindung ist, dass schlechte Produktereihen mittels dieses weiteren Förderers aus dem Produktionsprozess bzw. Produktfluss ausgeschleust werden können. Diese Ausschleusmöglichkeit ausschüssiger Produkte bildet einen wichtigen Bestandteil der Speicherzuführeinrichtung.

In einer weiteren Ausführungsvariante der Erfindung umfasst die Speichereinrichtung mindestens eine an den Speicherschlaufen beweglich angeordnete Gondel, wobei jede Gondel mit mehreren als Tablare ausgebildeten Produkteablagen aufweist, dass die Speicherschlaufen endlos um Umlenkräder geführt sind, wobei mindestens ein Umlenkrad einer jeden Speicherschlaufe motorisch antreibbar ist, dass die Ausgangsstation der Speichereinrichtung mindestens einen Schieber zur Ausgabe von Produkten auf mindestens einen Förderer umfasst, wobei der Schieber so angeordnet ist, dass Produkte von einem zu entleerenden Tablar annähernd horizontal auf jeden Förderer ausschiebbar sind. Einer der Vorteile der Erfindung besteht darin, dass von der Produktionsstation her geförderte Produkte insbesondere bei einem Unterbruch der Verpackungsstation in den Speicher eingelagert werden können. Damit kann die Produktion der Produkte kontinuierlich fortgeführt werden. Dabei werden die in Reihen geförderten Produkte auf Gondeltablare zwischengelagert. Bei der vorliegenden Ausführungsvariante zirkulieren die Gondeln mittels der Speicherschlaufen im Speicher.

In einer Ausführungsvariante der Erfindung sind die Eingangsstation und die Ausgangsstation auf derselben Seite der Speichereinrichtung angeordnet. Einer der Vorteile der Erfindung ist, dass Produkte mittels des Schiebers zu einem optimalen Zeitpunkt aus dem Speicher auf einen zu einer Verpackungsstation führenden Förderer ausschiebbar sind, bspw. wenn die Produktion gerade unterbrochen ist. Dadurch ist die Verpackungsmaschine kontinuierlich beschickbar. Ein weiterer Vorteil besteht darin, dass die Verpackungsgeschwindigkeit dadurch erhöht werden kann, dass der Verpackungsmaschine Produkte sowohl aus dem Speicher, als auch vom Verteil-Förderer herkommend über einen gemeinsamen zur Verpackungsmaschine führenden Förderer zuführbar sind.

In einer anderen Ausführungsvariante der Erfindung sind sowohl die Eingangstation als auch die Ausgangsstation der Speichereinrichtung auf der dem Zuführförderer zugewandten Seite der Speichereinrichtung angeordnet. Einer der Vorteile der Erfindung besteht darin, dass einerseits Produkte direkt aus dem Produktionsfluss heraus mittels des Zuführförderers auf ein Queraustrageband transportierbar sind und andererseits im Speicher zwischengelagerte Produkte mittels des Schiebers des Speichers auf dasselbe Queraustrageband transportierbar sind. Dadurch ist das vorzugsweise quer zur Hauptförderrichtung angeordnete Queraustrageband aus mehreren Quellen mit Produkten beschickbar, was die Zuverlässigkeit der Beschickung der Verpackungsmaschine erhöht. Zudem ist vorteilhaft, dass eingespeicherte Produkte bereits nach einem Aufwärtsbewegungstakt des Speichers an der Ausgangsstation wieder ausschiebbar sind. Ein eingespeichertes Produkt muss also nicht zuerst durch den Speicher hindurch gefördert werden, um danach ausgeschoben zu werden.

In einer weiteren Ausführungsvariante der Erfindung umfasst die Speicherzuführeinrichtung eine Steuerung zum Steuern und/oder Regeln der motorisch antreibbaren Umlenkmittel basierend auf mittels Sensormitteln generierbaren Sensorsignalen. Einer der Vorteile der Erfindung ist, dass die Speicherzuführeinrichtung in Abhängigkeit verschiedener für den Produktionsprozess relevanter Sensorsignale steuer- und/oder regelbar ist. Die Bandnase kann entsprechend dieser Signale horizontal und/oder vertikal stufenlos positioniert werden. Dadurch können die Produkte entweder der Verpackungsstation oder dem Speicher zugeführt werden, wodurch dieser mit der zweiachsig stufenlos positionierbaren Bandnase ausgestattete Förderer als Verteil-Förderer dient. Die Geschwindigkeit des Bands oder Gurts des dieses Förderers kann ebenfalls variiert werden. Allenfalls schlechte Produkte können aus der Produktion ausgegliedert und über einen weiteren Förderer der Entsorgung zugeführt werden. Als Sensormittel werden bspw. Lichtschranken oder induktive Näherungssensoren verwendet, mittels welchen entsprechende Sensorsignale generierbar sind und der Steuerung zuführbar sind.

In einer Ausführungsvariante der Erfindung sind motorisch antreibbare Umlenkmittel zum Schwenken des Zuführförderer-Abschnitts um eine Schwenkachse vorhanden und ferner sind ebenfalls motorisch antreibbare Umlenkmittel zur Verlängerung oder Verkürzung des längenverstellbaren Zuführförderer-Abschnitts vorhanden. Einer der Vorteile der Erfindung besteht darin, dass die freie Positionierbarkeit des Auslaufendes des Zuführförderers bspw. mittels Elektroantrieben, hydraulischen Antrieben und dergleichen realisierbar ist. Vorzugsweise ist ein regelbarer Elektroantrieb mit einem Getriebe vorhanden, mittels welchem ein Hebelarm zum Heben der Bandnase antreibbar ist. Und es ist Antrieb mit Getriebe vorhanden, mittels welchem ein Schiebearm zum Verlängern oder Verkürzen des teleskopischen Zuführförderer-Abschnitts vorhanden ist.

In einer Ausführungsvariante der Erfindung ist der Zuführförderer als einstückiges endloses Förderband ausgebildet. Einer der Vorteile der Erfindung besteht darin, dass der Zuführförderer ohne Übergänge zwischen mehreren Bandabschnitten aufweist. Die Anordnung der in Reihen geförderten Produkte bleibt dabei erhalten und wird auch nicht durch das Schwenken oder die Längenveränderung des Zuführförderer-Abschnitts beeinträchtigt.

In einer Ausführungsvariante der Erfindung ist die Eingangstation der Speichereinrichtung von der Ausgangsstation der Speichereinrichtung um mindestens einen Abstand zweier vertikal benachbarter Produkteablagen beabstandet. Einer der Vorteile der Erfindung besteht darin, dass zum Umpositionieren der Bandnase zwischen dem ersten freien und mit Produkten befüllbaren Tablar im Speicher und zwischen der Position zur Ablage von Produkten auf das Queraustrageband, der Zuführförderer-Abschnitt einen kleinst möglichen Weg zurücklegt. Nach dem Fördern der Gondeln an den Speicherschlaufen der Speichereinrichtung um einen Tablarabstand nach unten steht bereits wieder ein freies Tablar zum Befüllen mit Produkten mittels des Zuführförderers bereit. Das Zusammenwirken zwischen Zuführförderer, Speichereinrichtung und Queraustrageband ist dadurch effizient ausgebildet und optimiert.

Die nachstehenden Begriffe haben folgende Bedeutung:

Zuführförderer: Fördermittel, insbesondere ein Förderband bzw. Bandförderer. Weitere verwendete Begriffe sind auch Beschickungsförderer, Beladeförderer oder Verteilförderer. Der Förderer weist üblicherweise ein Band auf, welches motorisch antreibbar vor- und rücklaufend betrieben werden kann.

Querförderer: Förderer, welcher vorzugsweise annähernd rechtwingklig zur Hauptförderrichtung der Produkte angeordnet ist, um die Produkte üblicherweise einer Verpackungsmaschine zuzuführen. Weitere verwendete Begriffe sind Queraustrageband, Queraustrageförderer, Austrageförderer oder quer angeordneter Förderer.

Speichereinrichtung: Weitere verwendete Begriffe sind Speicher, Zwischenspeicher, Stückgutspeicher oder Kettenspeicher und dienen insbesondere der mindestens vorübergehenden Speicherung von in Reihen angeordnetem Stückgut, wobei der Speicher mit Blick auf den Produktionsfluss zwischen einer Produktions- und einer Verpackungsmaschine angeordnet ist.

Gondel: Lagereinheit eines Zwischenspeichers mit meist mehreren übereinander angeordneten Tablaren, auf welchen Produkte zwischenzeitlich lagerbar sind, wobei jede Gondel an mehreren Aufhängepunkten an Speicherschlaufen bzw. Ketten der Speichereinrichtung lösbar aufgehängt ist.

Produkteablage: Tablar, Etage, Ablageebene einer Speichereinrichtung, um Produkte zum Zwischenspeichern vorübergehend aufzunehmen.

Im Folgenden wird die Erfindung anhand der in den Zeichnungen dargestellten Ausführungsbeispiele näher erläutert. Hierbei gehen aus den Zeichnungen und ihrer Beschreibung weitere wesentliche Merkmale und Vorteile der Erfindung hervor.
Fig. 1 zeigt eine schematische Seitenansicht der Beschickungs-Vorrichtung mit nachfolgend angeordnetem Speicher;
Fig. 2 zeigt eine schematische Aufsicht der Speicherzuführeinrichtung;
Fig. 3 zeigt ein Detail der sich in der Grundstellung befindenden Speicherzuführeinrichtung in einer schematischen Seitenansicht;
Fig. 4 zeigt ein Detail der Speicherzuführeinrichtung in einer schematischen Seitenansicht, wobei ein Produkt so positioniert wird, dass es auf einen zur Verpackungsstation führenden Förderer abgelegt werden kann;
Fig. 5 zeigt ein Detail der Speicherzuführeinrichtung in einer schematischen Seitenansicht, wobei ein Produkt auf einen zur Verpackungsstation führenden Förderer abgelegt worden ist;
Fig. 6 zeigt ein Detail der Speicherzuführeinrichtung in einer schematischen Seitenansicht, wobei ein Produkt so in Position gebracht wird, dass es auf einen zu einer Verarbeitungsstation führenden Förderer abgelegt werden kann.
Fig. 7 zeigt ein Detail der Speicherzuführeinrichtung in einer schematischen Seitenansicht, wobei ein Produkt auf ein Tablar einer Gondel in einem Speicher abgelegt worden ist;
Fig. 8 zeigt ein Detail der Speicherzuführeinrichtung in einer schematischen Seitenansicht, wobei ein weiteres Produkt auf nächstes leeres Tablar einer Gondel im Speicher abgelegt worden ist;
Fig. 9 zeigt ein Detail der Speicherzuführeinrichtung in einer schematischen Seitenansicht, wobei die Gondeln im Speicher nach oben transportiert werden, um ein weiteres Produkt mittels des Schiebers aus dem Speicher auf das Queraustrageband auszuschieben;
Fig. 10 zeigt ein Detail der Speicherzuführeinrichtung in einer schematischen Seitenansicht, wobei der Schieber ein Produkt auf den zur Verpackungsstation führenden Förderer ausgeschoben hat;
Fig. 11 zeigt ein Detail der Speicherzuführeinrichtung in einer schematischen Seitenansicht, wobei der Schieber ein Produkt aus dem Speicher über den zur Verpackungsstation führenden Förderer hinweg auf den zur Verarbeitungsstation führenden Förderer ausgeschoben hat.

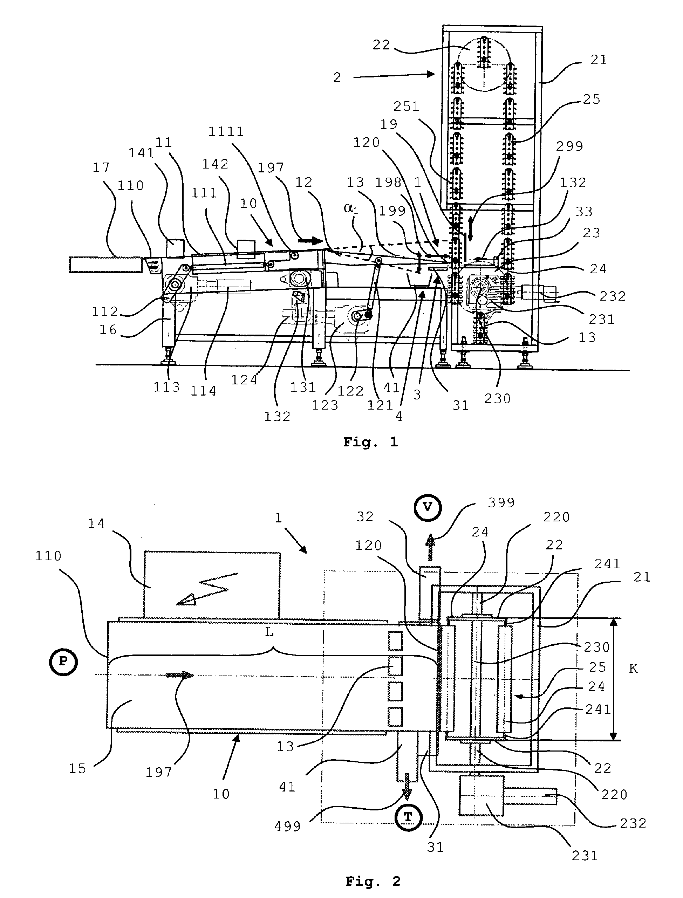

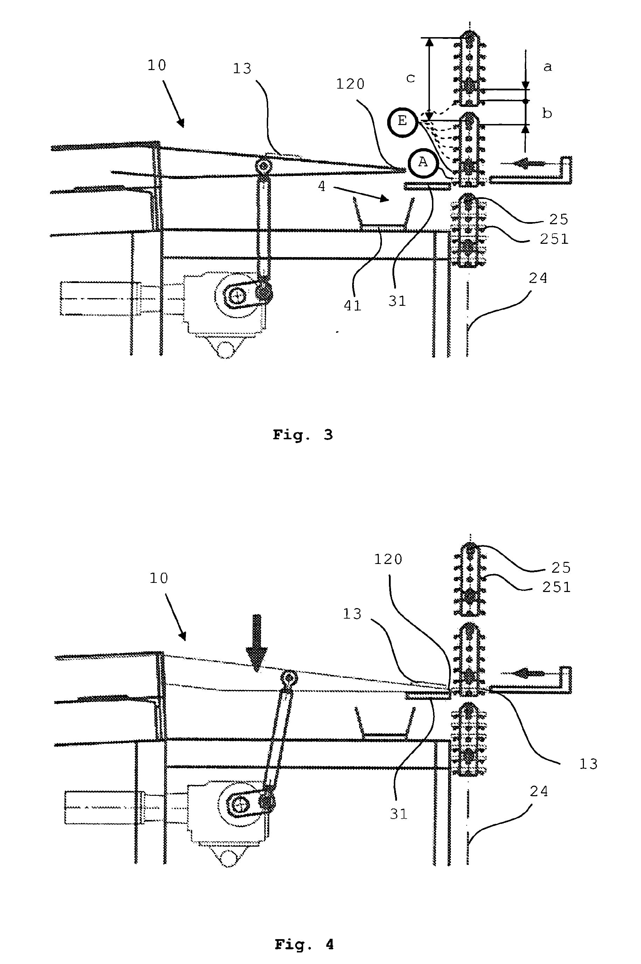

Die Figur 1 illustriert eine mit dem Bezugszeichen 1 bezeichnete Speicherzuführeinrichtung. Diese weist ein Förderband bzw. einen Belade-Förderer 10 auf, welche bzw. welcher einen Förderband-Abschnitt 12 umfasst. Dieser Förderband-Abschnitt 12 weist ein Förderbandende oder Auslaufende bzw. eine Bandnase 120 auf, welche durch Antriebs- und Umlenkmittel vertikal schwenkbar angetrieben ist. Diese Schwenkung wird durch den Doppelpfeil mit Bezugszeichen 199 veranschaulicht. Die Antriebs- und Umlenkmittel umfassen einen Motor 124, einem Getriebe 123 und ein Hebelwerk 121,122. Das Hebelwerk wird vorzugsweise durch eine Schubstange 121 sowie einen Hebel 122 ausgeführt. Das Auslaufende ist im Auslaufbereich des Förderers 10 angeordnet. Der Belade-Förderer 10 weist einen weiteren Förderband-Abschnitt 11 auf, welcher üblicherweise starr mit einem Chassis bzw. einer Rahmenstruktur 16 verbunden ist. Dieser Förderband-Abschnitt weist im Einlaufbereich des Förderers 10 ein sich befindendes Einlaufende 110 auf. Der motorische Antrieb des Förderbands besteht üblicherweise aus einem steuer- und/oder regelbaren Servomotor. Die Fördergeschwindigkeit des Belade-Förderers 10 kann dadurch stufenlos gesteuert werden. Der Belade-Förderer bzw. Zuführförderer 10 ist zudem durch einen Antrieb 113,114 und einem Hebelwerk 111,112 ausgebildet, so dass das einem Speicher 2 zugerichtete Ende des Belade-Förderers bzw. die Bandnase 120 annähernd horizontal verschiebbar angetrieben ist, wie dies anhand des Pfeils mit Bezugszeichen 198 verdeutlicht wird. Auch dieser Antrieb umfasst einen Motor, bspw. einen Elektromotor 114 oder einen hydraulischen Antrieb mit entsprechendem Hebelwerk 111,112, wobei der dem Speicher zugerichtete Förderband-Abschnitt 12 teleskopartig in dem vom Speicher 2 entfernteren Förderband-Abschnitt 11 verschoben wird. Dieses Hebelwerk besteht vorzugsweise aus einer Stange 111 und einem Hebel 112. Der Förderband-Abschnitt 11 kann leicht geneigt montiert sein. Aus Figur 1 ist ersichtlich, dass der verschiebbare Förderband-Abschnitt 12 um eine Drehachse 1111 drehbar ist, welche auf einem im starren Förderband-Abschnitt 11 geführten Schlitten um einen Winkel α₁ verschwenkbar angeordnet ist. In einer weiteren Ausführungsform kann jedoch die Drehachse 1111 auch in dem Speicher entfernten Ende 110 des Zuführförderers 10 angeordnet sein, so dass der als teleskopisch verlängerbare und/oder verkürzbare Belade-Förderer 10 als Ganzes um diese Drehachse 1111 drehbar bzw. verschwenkbar gelagert ist. Dadurch, dass der Belade-Förderer 10 und insbesondere die dem Speicher 2 zugerichtete Bandnase 120 sowohl in horizontaler wie auch in vertikaler Richtung beweglich gelagert ist, kann ein zweidimensionaler Bereich analog einem X- und Y-Koordinatensystem abgearbeitet werden. Die Bandnase 120 ist in diesem Bereich nahezu beliebig positionierbar. Dadurch wird es möglich, eine sich auf der Bandnase 120 befindende Produktreihe 13, durch gleichzeitiges Absenken und Zurückziehen der Bandnase 120 auf das vorzugsweise unterhalb und quer zur Produktionslinie angeordnete Förderband 31 abzulegen. Diese Reihe von Produkten 13 wird dann über das in Figur 2 dargestellte Förderband 32 in die nicht illustrierte Verpackungsmaschine V gefördert. Bei einem Unterbruch der Verpackungsmaschine V können die leeren Tablare 251 der Gondeln 25 im Speicher 2 beladen werden. Der Speicher 2 weist ein Chassis bzw. eine Rahmenstruktur 21 auf. In dieser Rahmenstruktur 21 sind jeweils Paare von Umlaufrädern 22,23 an mindestens einer Welle 220 (siehe Figur 2) und an mindestens zwei freilaufenden Achsstummeln 230 angeordnet. Die vorzugsweise mindestens eine Welle 220 ist üblicherweise im unteren Bereich des Speichers 2 angeordnet und durch einen steuer- und/oder regelbaren Elektromotor 232 über ein Getriebe 231 angetrieben. Jeweils um ein erstes und mindestens um ein zweites in Flucht angeordnetes Umlaufrad 22,23 ist eine Speicherschlaufe 24 angeordnet. Die Speicherschlaufe 24 ist vorzugsweise als endloses Band oder Kette ausgeführt. Eine Speicherschlaufe kann auch über mehrere Umlaufräder geführt werden, so dass der Speicher 2 zusätzliche Gondeln 25 aufnehmen kann. Mindestens zwei Speicherschlaufen 24 sind im Abstand K gemäss Figur 2 voneinander beabstandet. An den Speicherschlaufen 24 sind mehrere Gondeln 25 vorzugsweise lösbar angeordnet. Jeweils eine Gondel 25 wird an der aus Figur 3 ersichtlichen Eingangsstation E bzw. Ausgangsstation A des Speichers vorbeigeführt. An der Ausgangsstation A wird mindestens eine Reihe von Produkten 13 mittels mindestens eines Schiebers 33 auf eine Ablage ausgegeben. Die Ablage der Ausgangsstation A des Speichers 2 ist üblicherweise als Förderer ausgeführt. An der Eingangstation E des Speichers 2 wird mindestens eine Ablage mit Produkten 13 beschickt. Der Antrieb der Speicherschlaufen 24 weist üblicherweise einen Elektromotor 232 mit einem Getriebe 231 auf, welcher vorzugsweise mit der untenliegenden Welle 231 verbunden ist und die Speicherschlaufen 24 über die Umlaufräder 23 antreibt. Der Antrieb kann taktweise erfolgen, so dass ein wie in Figur 3 gezeigter Abstand a, ein Abstand b oder ein beliebiger anderer Abstand bzw. Weg, wie etwa Abstand c, zurücklegbar ist. Die Speicherschlaufe 24 kann in zwei Richtungen angetrieben werden, wie dies durch den Doppelpfeil mit Bezugszeichen 299 veranschaulicht wird. Die Ketten bzw. Speicherschlaufen 24 sind dadurch reversibel umlaufend gehalten. Aus Figur 1 wird somit ersichtlich, dass eine Verpackungsstation V über ein Förderband 31,32 einerseits mittels des Belade-Förderers 10 mit Reihen von Produkten 13 beschickt werden kann. Andererseits können Produkte 13 mittels des Schiebers 33 aus dem an den Belade-Förderer 10 angrenzenden Speicher 2 auf den Förderer 31 ausgeschobenen werden. Über die Förderer 31,32 werden die Produkte in beiden Fällen der Verpackungsstation V zugeführt.

Figur 2 illustriert die Speicherzuführeinrichtung 1 in einer Aufsicht. Über die Förderer 31,32 werden Reihen von Produkten 13 zur Verpackungsstation V transportiert. Das Bezugszeichen 399 illustriert die Transportrichtung des Förderers 10 mit der Länge L, wobei die Verpackungsstation V bspw. auch auf der gegenüberliegenden Seite angeordnet sein kann. Die Transportrichtung der Förderer 31,32 würde sich entsprechend ändern. Analog verhält es sich mit der Transportrichtung 499 und der Anordnung des Förderers 41 hin zur Verarbeitungsstation T. Die vorliegende Speicherzuführeinrichtung 1 beschickt den Speicher 2, welcher nach dem "first-in - last-out" Prinzip arbeitet. Die um Umlaufräder 22,23 der jeweiligen Speicherschlaufen 24 sind um die Länge K beabstandet. Die umlaufend mit Produkteträgergondeln, Behältern bzw. Gondeln 25 bestückte Speicherschlaufe 24 wird entweder abwärts zum Beladen oder aufwärts zum Entladen der Produkte an der Eingangsstation E bzw. der Ausgangsstation A vorbei bewegt. Jede Speicherschlaufe 24 weist dauerhaft mit dieser verbundene und gleichmässig zueinander beabstandete Mitnehmer 241 auf. Jede Gondel 25 wiederum ist an ihren beiden schmalen Seiten lösbar mit entsprechend je einem dieser Mitnehmer 241 der Speicherschlaufen 24 lösbar gekoppelt. Dadurch arbeitet der Speicher gegenüber den bekannten Speichern effizienter. Ein ca. 2 m langer und ca. 5 m hoher Speicher 2 kann ca. 300 Produktreihen 13 mit 100 g schweren Schokotafeln aufnehmen. Hierfür wäre ein Bandspeicher mit vergleichbarer Leistung mit einer Länge von ca. 70 m notwendig. Die vorgeschlagene Anordnung erweist sich als sehr platzsparend, effizient und kostengünstig.

Die Figur 3 illustriert ein Detail der sich in der Grundstellung befindenden Speicherzuführeinrichtung. In dieser Position können bspw. Wartungs- oder Reinigungsarbeiten im Bereich der Beschickungs-Vorrichtung vorgenommen werden. Figur 3 zeigt zudem drei Gondeln 25 eines an die Speicherzuführeinrichtung 1 angrenzenden Speichers 2. Dieser weist eine Eingangsstation E zum Beladen von Produkten in den Speicher sowie eine Ausgangsstation A zum Entladen der Produkte auf. Die Eingangsstation E und die Ausgangsstation A sind auf derselben Seite des Speichers angeordnet. Der Speicher 2 wird nach unten taktweise befüllt bzw. beladen und reversibel mit taktweise bewegter Speicherschlaufe 24 nach oben entleert bzw. entladen. Die Befüllung des Speichers 2 erfolgt mit Bandnase 120 in einer vorderen Position, mindestens aber einen Tablarabstand a über der Austrageebene von Förderer 31. Die Dicke der Bandnase 120 ist so dimensioniert, dass sie zusammen mit der Höhe eines Produkts 13 weniger als der Abstand a zwischen zwei Tablaren beträgt. Dadurch ist gewährleistet, dass ein Produkt, welches aus dem Speicher 2 auf den Querförderer 31 ausgeschoben wird, von der Bandnase 120 nicht berührt wird, wenn das zu befüllende Tablar 251 vom Zuführförderer befüllt wird. Der Vertikalhub der horizontal und/oder vertikal positionierbaren Bandnase 120 reicht aus, um mehrere Etagen bzw. Tablare 251 nach oben zu beladen. Dies ist insbesondere bei stillstehender Speicherschlaufe 24 erforderlich, wenn diese gerade durch den Schieber 33 blockiert ist. Es kann auch dann erforderlich sein, wenn eine höhere Verpackungsleistung erreicht werden will, wobei sich dann die Bandnase 120 zur konstant nach unten bewegenden Speicherschlaufe 24 aufsynchronisiert. Abstand a bezeichnet demnach einen Abstand zwischen zwei aufeinanderfolgenden Produktablagen 251. Weitere Begriffe für Produktablagen sind auch Tablare oder Etagen. Abstand b wiederum bezeichnet den Abstand zwischen einem letzten Tablar 251 einer ersten Gondel 25 und einem ersten Tablar 251 einer ihr nachfolgenden Gondel 25. Abstand c bezeichnet den Abstand zwischen bspw. den jeweils obersten Tablaren 251 zweier benachbarter Gondeln 25 im vertikalen Strang oder Trum der Speicherschlaufen 24, an welchen die Gondeln wiederentfernbar an Mitnehmern 241 angekoppelt sind. Ausserdem weist die vorgeschlagene Speicherzuführeinrichtung eine Auswurfmöglichkeit für qualitativ schlechte Reihen von Produkten 13 auf. Schlechte Reihen sind bspw. zu lang oder zu hoch, oder haben einen zu geringen Abstand zueinander, was in der Inspektions-Einheit 141 erkannt wird. Entsprechende Steuer- und/oder Datensignale werden von der Inspektionseinheit 141 an die Steuerung 14 weitergeleitet. Schlecht können auch metallkontaminierte Reihen von Produkten 13 sein. Diese werden durch den Metalldetektor 142 erkannt. Entsprechende Steuer- und/oder Datensignale werden vom Metalldetektor 142 an die Steuerung 14 weitergeleitet. Schlechte Reihen werden in einer sog. Rückzugsposition der Bandnase 120 ausgeworfen. Dazu wird die Bandnase 120 zurückgezogen und der Belade-Förderer 10 damit verkürzt, so dass die Produktreihen 13 nach unten auf den aus Figur 1 ersichtlichen Förderer 41 der Auswurfstation 4 fallen und vorzugsweise quer zum Produktionsfluss zur Verarbeitungsstation T transportiert werden können. Der Förderer 41 der Auswurfstation 4 wird auch als Auswurfförderer bezeichnet.

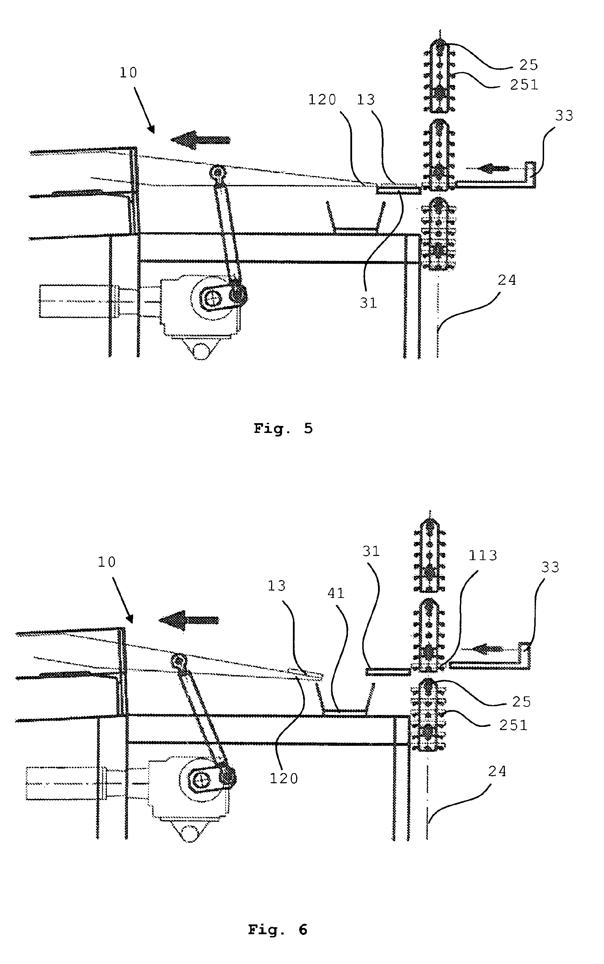

Die Figuren 4 und 5 illustrieren ein Detail der Speicherzuführeinrichtung 1, wobei ein Produkt 13 so positioniert wird, dass es auf einen zur Verpackungsstation führenden Förderer abgelegt werden kann. Hierzu wird die Bandnase 120 des Belade-Förderers 10 so nah wie nötig an das Tablar 251 der Gondel 15 herangeführt. Der Abstand zwischen Bandnase 120 und dem Rand des zu beschickenden Tablars 251 bestimmt sich bspw. durch Grösse des Produkts 13 oder der Geschwindigkeit des Vortriebs des Belade-Förderers 10. Durch den Vortrieb des Förderbands wird die Produktreihe 13 auf das Tablar 251 der Gondel 25 geschoben. Ein in Figur 1 ersichtlicher Anschlag 19 verhindert, dass die Produkte über das Tablar hinweg rutschen oder gar vom Tablar 251 fallen.

Die Figur 6 illustriert ein Detail der Speicherzuführeinrichtung 1, wobei ein Produkt 13 so in Position gebracht wird, dass es auf einen zu einer Verarbeitungsstation T führenden Förderer 41 abgelegt werden kann.

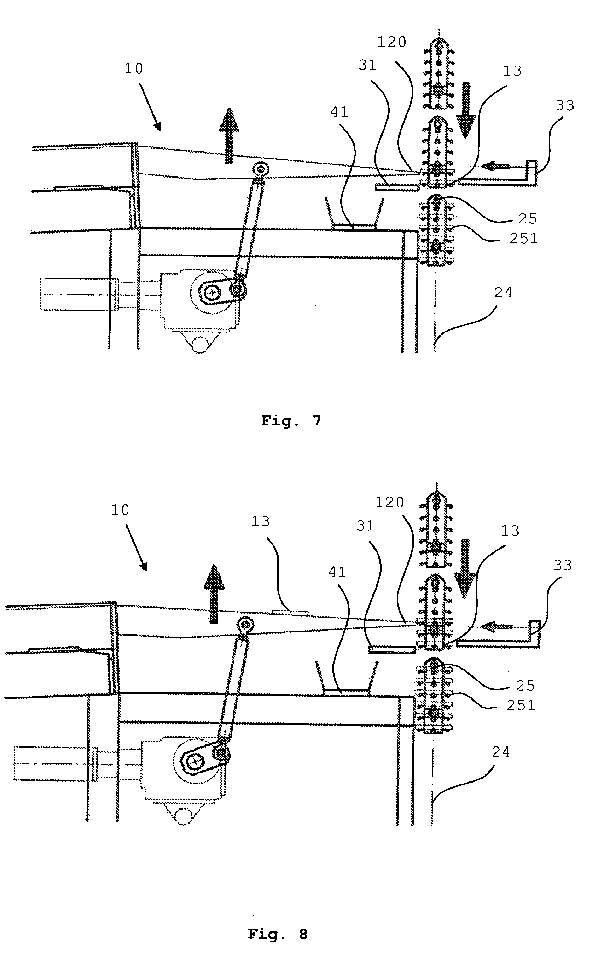

Die Figuren 7 und 8 illustrieren ein Detail der Speicherzuführeinrichtung 1, wobei eine Reihe von Produkten 13 durch einen dem Speicher 2 vorgelagerten Belade-Förderer 10 in Position gebracht wird, um auf ein leeres Tablar 251 abgelegt zu werden. In der zu beladenden Gondel 25 wird in Figur 7 ein erstes Tablar 251 beschickt. Figur 8 illustriert, wie ein darüberliegendes Tablar 251 mit einer weiteren nachfolgenden Produktereihe 13 beschickt wird. Selbst wenn die Speicherschlaufe 24 angehalten wird bzw. still steht, so können mittels des Belade-Förderers 10 mehrere Tablare 251 mit Produkten 13 beschickt werden. Die tiefstliegende Beladeebene bzw. die tiefste Position des Förderbandendes 120 entspricht mindestens dem Abstand a zwischen zwei Tablaren 251. Die tiefste Beladeebende ist von der Oberfläche des Förderers 31 um mindestens den Abstand a beabstandet. Der Schieber 33 ist vorzugsweise so anzuordnen, dass eine Produktereihe 13 über ein in Flucht und Höhe mit dem Förderer 31 ausgerichtetes Tablar 251 auf den Förderer 31 ausschiebbar ist.

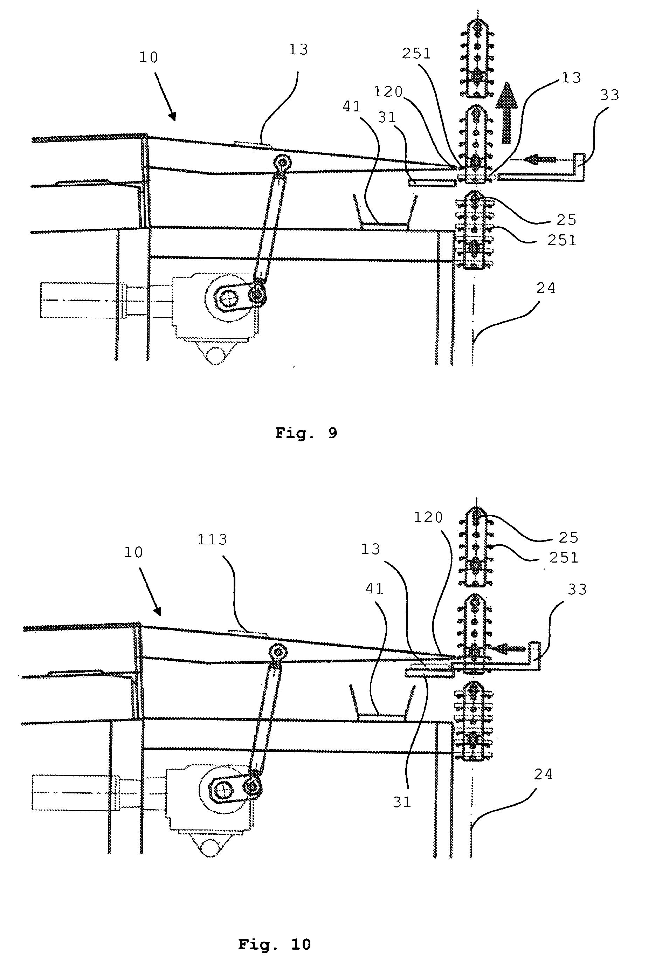

Die Figur 9 illustriert ein Detail der Speicherzuführeinrichtung, wobei die Gondeln 25 im Speicher 2 nach oben transportiert werden, so dass ein weiteres Produkt 13 aus dem Speicher 2 auf den zur Verpackungsstation V führenden Förderer 31 durch den Schieber 33 ausgeschoben werden kann. Gleichzeitig kann eine weitere Reihe von Produkten 13, welche in Hauptrichtung auf dem Zuführförderer 10 transportiert werden, auf das benachbarte leere Tablar 251 gefördert werden.

Die Figur 10 illustriert ein Detail der Speicherzuführeinrichtung 1, wobei der Schieber 33 ein Produkt 13 auf den zur Verpackungsstation V führenden Förderer 31 ausgeschoben hat. Das geschieht vorzugsweise dann, wenn von der Produktionsstation P herkommend der Produktfluss keine Produktreihe 13 zur Verfügung stellen kann und eine Lücke entsteht. In diese Lücke kann dann eine Reihe von Produkten 13 aus dem Speicher 2 passgenau mittels des Schiebers 33 auf den Förderer 31 ausgeschoben werden. Dadurch entsteht bei der Verpackungsstation V keine Unterversorgung mit Produkten 13. Zudem kann der Speicher 2 sukzessive geleert werden. Die abwechselnde Beschickung des Förderers 31 aus dem Speicher 2 bzw. vom Belade-Förderer 10 kann gezielt genutzt werden. So können bspw. mit einem in Figur 1 ersichtlichen, vorgelagerten Förderer 17 gezielt Lücken zwischen nachfolgenden Reihen von Produkten 13 erzeugt werden. Die dadurch entstehenden Lücken können mit Reihen von Produkten 13 aus dem Speicher 2 aufgefüllt werden. In einer solchen Phase wird die Verpackungsmaschine V mit einer höheren Leistung beschickt. Zudem wird erreicht, dass der Speicher nach und nach geleert wird.

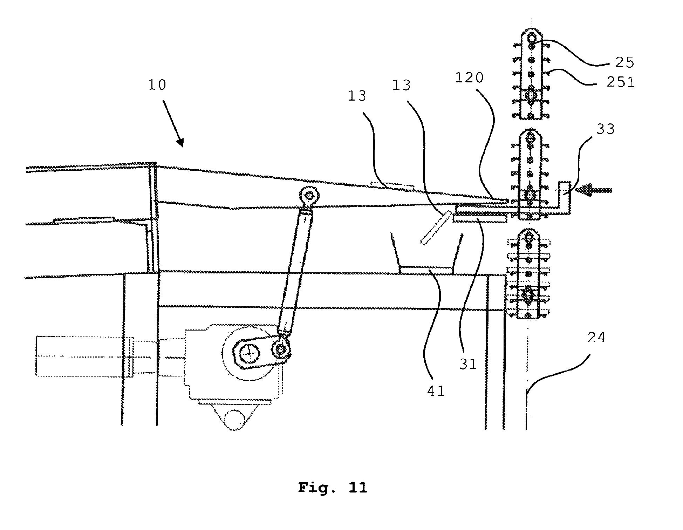

Figur 11 zeigt, in Verbindung mit den Figuren 1, 2 und 3, ein Detail der Speicherzuführeinrichtung 1, wobei der Schieber 33 ein Produkt 13 aus dem Speicher 2 über den zur Verpackungsstation V führenden Förderer 31 hinweg auf den zur Verarbeitungsstation T führenden Förderer 41 ausgeschoben hat. Mittels der Steuerung bzw. Regelung 14 der Speicherzuführeinrichtung 1 kann bspw. festgestellt werden, wie lange eine bestimmte Produktereihe 13 während der Produktion im Speicher 2 eingelagert ist. Wird ein gewisser Grenzwert einer Einspeicherung erreicht, so können diese Produktereihen gezielt aus dem Produktionsprozess ausgegliedert werden. Dazu wird das entsprechende Tablar 251 einer Gondel 25 zur Ausgangsstation A des Speichers 2 geführt. Der Schieber 33 ist so dimensioniert, dass dieser eine Produktereihe 13 auf den Förderer 31 und darüber hinaus ausschieben kann, so dass die Produktereihe 13 auf den Förderer 41 der Auswurfstation 4 zur Verarbeitungsstation T gelangt.

### Bezugszeichenlegende

| | |
|---|---|
| 1 | Speicherzuführeinrichtung |
| 10 | Zuführförderer, Förderer, Verteil-Förderer |
| 110 | Förderbandende, Bandnase, Einlaufende, Einlauf-Ende |
| 1111 | Drehachse |
| 11 | Förderband-Abschnitt |
| 111 | Stange, Schubstange |
| 112 | Hebel |
| 113 | Getriebe |
| 114 | Motor |
| 12 | Förderband-Abschnitt |
| 120 | Förderbandende, Bandnase, Auslaufende, Auslauf-Ende |
| 121 | Stange, Schubstange |
| 122 | Hebel |
| 123 | Getriebe |
| 124 | Motor |
| 13 | Produkt bzw. Produktreihe |
| 14 | Steuerung bzw. Regelung |
| 141 | Inspektionseinheit |
| 142 | Metalldetektor |
| 15 | Band, Fördergurt |
| 16 | Rahmenstruktur |
| 17 | Förderband, Förderer |
| 19 | Anschlagmittel, Anschlag |
| 197 | Förderrichtung, Hauptförderrichtung |
| 198 | Vor- und Rückbewegungsrichtung |
| 199 | Auf- und Abschwenkrichtung |
| | |
| 2 | Speicher, Speichereinrichtung, Zwischenspeicher |
| 21 | Rahmenstruktur |
| 22 | Umlenkrad |
| 220 | Welle |
| 23 | Umlenkrad |
| 230 | Achsstummel |
| 231 | Getriebe |
| 232 | Motor |
| 24 | Speicherschlaufe bzw. -kette |
| 241 | Mitnehmer |
| 25 | Gondel |
| 251 | Tablar, Produkteablage, Etage |
| 299 | Förderrichtung |
| | |
| 3 | Entladestation |
| 31 | Förderband, Förderer |
| 32 | Förderband, Förderer |
| 33 | Schieber, Ausschieber |
| 399 | Förderrichtung |
| | |
| 4 | Auswurfstation |
| 41 | Förderband, Förderer |
| 499 | Förderrichtung |
| | |
| A | Ausgangsstation |
| E | Eingangstation |
| F | Förderrichtung |
| V | Verpackungsstation |
| P | Produktionsstation |
| T | Verarbeitungsstation |
| L | Länge |
| K | Länge |
| | |
| a | Tablar-Abstand |
| b | Tablar-Abstand |
| c | Abstand, Gondel-Höhe |
| | |
| α₁ | Winkel |

## Patentansprüche

1. Zwischenspeicher, mit einer Speichereinrichtung (2) mit mehreren Produkteablagen (251) zum Zwischenspeichern von Produkten (13), wobei mindestens zwei endlose Speicherschlaufen (24) der Speichereinrichtung (2) vorhanden sind, mittels welchen die Produkteablagen (251) zwischen einer Eingangsstation (E) zur Aufnahme von Produkten und einer Ausgangsstation (A) zur Abgabe der zwischengespeicherten Produkte (13) förderbar sind, wobei die Produkteablagen (251) im Bereich der Eingangsstation (E) zueinander vertikal beabstandet sind; und mit einer Speicherzuführeinrichtung (1) mit einem Zuführförderer (10) zum Fördern von Produkten (13) in einer Hauptförderrichtung (197) zwischen einem Einlaufende (110) zum Aufnehmen der Produkte (13) und einem Auslaufende (120) zum Abgeben und Zuführen der Produkte (13) zu der Speichereinrichtung (2), wobei der Zuführförderer (10) einen vertikal schwenkbaren Zuführförderer-Abschnitt (12) umfasst, wobei Produkte (13) mittels des schwenkbaren Zuführförderer-Abschnitts (12) an mehrere übereinander angeordnete Produkteablagen (251) der Speichereinrichtung (2) zuführbar sind, **dadurch gekennzeichnet,**
**dass** der Zwischenspeicher einen weiteren als vorübergehende Produkteablage dienenden Förderer (31) aufweist, um die Produkte (13) einer dem weiteren Förderer (31) nachgeschalteten Verarbeitungsmaschine zuzuführen,
**dass** der Zuführförderer-Abschnitt (12) in Hauptförderrichtung (197) längenverstellbar ausgebildet ist, wobei das Auslaufende (120) des längenverstellbaren und schwenkbaren Zuführförderer-Abschnitts (12) horizontal und vertikal frei zwischen mehreren Produkteablagen (251) und mindestens dem weiteren Förderer (31) positionierbar ist, so dass Produkte (13) entweder den Produkteablagen (251) der Speichereinrichtung (2) oder dem weiteren Förderer (31) zuführbar sind.

2. Zwischenspeicher gemäss Anspruch 1, **dadurch gekennzeichnet, dass** der weitere Förderer (31) zum Austragen von Produkten quer zur Hauptförderrichtung (197) des Zuführförderers (10) angeordnet ist, um die Produkte (13) einer dem weiteren Förderer (31) nachgeschalteten Verarbeitungsmaschine, bspw. einer Verpackungsmaschine (V), zuzuführen.

3. Zwischenspeicher gemäss einem der Ansprüche 1 und 2, **dadurch gekennzeichnet, dass** der Zwischenspeicher einen zusätzlichen weiteren Förderer (41) umfasst, welcher zwischen dem Zuführförderer (10) und der Speichereinrichtung (2) angeordnet ist, um die Produkte (13) vom Zuführförderer (10) oder bei der Ausgangsstation (A) der Speichereinrichtung (2) zu übernehmen, so dass die Produkte (13) einer dem zusätzlichen weiteren Förderer (41) nachgeschalteten Verarbeitungsmaschine, bspw. einer Verarbeitungsstation (T), zuführbar sind.

4. Zwischenspeicher gemäss einem der Ansprüche 1 bis 3, **dadurch gekennzeichnet, dass** die Speichereinrichtung (2) mindestens eine an den Speicherschlaufen (24) beweglich angeordnete Gondel (25) umfasst, wobei jede Gondel mehrere als Tablare (251) ausgebildete Produkteablagen aufweist, dass die Speicherschlaufen (24) endlos um Umlenkräder (22,23) geführt sind, wobei mindestens ein Umlenkrad einer jeden Speicherschlaufe (24) motorisch antreibbar ist, dass die Ausgangsstation (A) der Speichereinrichtung (2) mindestens einen Schieber (33) zur Ausgabe von Produkten (13) auf mindestens einen Förderer (31) umfasst, wobei der Schieber (33) so angeordnet ist, dass Produkte (13) von einem zu entleerenden Tablar (251) annähernd horizontal auf jeden Förderer (31) ausschiebbar sind.

5. Zwischenspeicher gemäss einem der Ansprüche 1 bis 4, **dadurch gekennzeichnet, dass** die Eingangsstation (E) und die Ausgangsstation (A) der Speichereinrichtung (2) auf derselben Seite der Speichereinrichtung (2) angeordnet sind.

6. Zwischenspeicher gemäss einem der Ansprüche 1 bis 5, **dadurch gekennzeichnet, dass** sowohl die Eingangstation (E) als auch die Ausgangsstation (A) der Speichereinrichtung (2) auf der dem Zuführförderer (10) zugewandten Seite der Speichereinrichtung (2) angeordnet sind.

7. Zwischenspeicher gemäss einem der Ansprüche 1 bis 6, **dadurch gekennzeichnet, dass** motorisch antreibbare Umlenkmittel (111,112,113,114) zum Schwenken des Zuführförderer-Abschnitts (12) um eine Schwenkachse (1111) vorhanden sind und dass ferner ebenfalls motorisch antreibbare Umlenkmittel (121,122,123,124) zur Verlängerung oder Verkürzung des längenverstellbaren Zuführförderer-Abschnitts (12) vorhanden sind.

8. Zwischenspeicher gemäss Anspruch 7, **dadurch gekennzeichnet, dass** dieser eine Steuerung (14) zum Steuern und/oder Regeln der motorisch antreibbaren Umlenkmittel (111,112;121,122) basierend auf mittels Sensormitteln generierbaren Sensorsignalen umfasst.

9. Zwischenspeicher gemäss einem der Ansprüche 1 bis 8, **dadurch gekennzeichnet, dass** der Zuführförderer (10) der Speicherzufuhreinrichtung (1) als einstückiges endloses Förderband ausgebildet ist.

10. Zwischenspeicher gemäss einem der Ansprüche 1 bis 8, **dadurch gekennzeichnet, dass** die Eingangstation (E) der Speichereinrichtung (2) von der Ausgangsstation (A) der Speichereinrichtung (2) um mindestens einen Abstand (a) zweier vertikal benachbarter Produkteablagen (251) beabstandet ist.

11. Verfahren zum Betrieb eines Zwischenspeichers nach einem der Ansprüche 1 bis 10, **dadurch gekennzeichnet, dass** das Auslaufende (120) des Förderer-Abschnitts (12) mittels motorisch antreibbaren Umlenkmitteln (111,112;121,122) basierend auf Steuer- und/oder Datensignalen der Steuerung (14) in horizontaler und vertikaler Richtung stufenlos positioniert wird, um Produkte (13) auf den weiteren Förderer (31) abzulegen.

12. Verfahren zum Betrieb eines Zwischenspeichers nach einem der Ansprüche 1 bis 10, **dadurch gekennzeichnet, dass** das Auslaufende (120) des Förderer-Abschnitts (12) mittels motorisch antreibbaren Umlenkmitteln (111,112;121,122) basierend auf Steuer- und/oder Datensignalen der Steuerung (14) in horizontaler und vertikaler Richtung stufenlos positioniert wird, um Produkte (13) auf den zusätzlichen weiteren Förderer (41) abzulegen.

13. Verfahren zum Betrieb eines Zwischenspeichers nach einem der Ansprüche 1 bis 10, **dadurch gekennzeichnet, dass** das Auslaufende (120) des Förderer-Abschnitts (12) mittels motorisch antreibbaren Umlenkmitteln (111,112;121,122) basierend auf Steuer- und/oder Datensignalen der Steuerung (14) in horizontaler und vertikaler Richtung stufenlos positioniert wird, um Produkte (13) auf mindestens eine Produkteablage (251) einer Gondel (25) der Speichereinrichtung (2) abzulegen.

## Claims

1. An intermediate storage means comprising a storage apparatus (2) with a plurality of product repositories (251) for intermediately storing products (13), wherein at least two continuous storage loops (24) of the storage apparatus (2) are provided for conveying the product repositories (251) between an inlet station (E) for receiving products and a discharge station (A) for discharging the intermediately stored products (13), wherein the product repositories (251) are separated vertically from one another near the inlet station (E); and comprising a storage means feeder (1) with a feed conveyor (10) for conveying products (13) in a primary feed direction (197) between an inlet end (110) for receiving the products (13) and an outlet end (120) for discharging and feeding the products (13) to the storage apparatus (2), wherein the feed conveyor (10) comprises a vertically pivoting feed conveyor section (12), wherein product (13) can be fed to a plurality of product repositories (251) of the storage apparatus (2), the repositories being disposed one above the other, by way of the pivoting feed conveyor section (12), **characterized in that**
the intermediate storage means comprises another conveyor (31) for temporary product storage in order to feed the products (13) to a processing machine downstream of said other conveyor (31),
the feed conveyor section (12) is configured to be adjustable lengthwise in the primary feed direction (197), wherein the outlet end (120) of the lengthwise-adjustable and pivoting feed conveyor section (12) can be freely positioned horizontally and vertically between a plurality of product repositories (251) and at least the other conveyor (31) so that products (13) can be fed either to the product repositories (251) of the storage apparatus (2) or to the other conveyor (31).

2. The intermediate storage means according to Claim 1, **characterized in that** the other conveyor (31) for discharging products is arranged transversely relative to the main conveying direction (197) of the feed conveyor (10) so that the products (13) can be fed to a processing machine, such as a packaging machine (V), that is disposed downstream of the other conveyor (31).

3. The intermediate storage means according to one of Claims 1 and 2, **characterized in that** the intermediate storage means comprises an additional other conveyor (41) for accepting the products (13) from the feed conveyor (10) or at the discharge station (A) of the storage apparatus (2), said additional other conveyor being disposed between the feed conveyor (10) and the storage apparatus (2), so that the products (13) can be fed to a processing machine, for example a processing station (T), disposed downstream of the additional other conveyor (41).

4. The intermediate storage means according to one of Claims 1 to 3, **characterized in that** the storage apparatus (2) comprises at least one gondola (25) that is moveably disposed at the storage loops (24), wherein each gondola comprises a plurality of product repositories designed as trays (251), the storage loops (24) are routed continuously around guide pulleys (22,23), wherein at least one guide pulley from each storage loop (24) can be driven by a motor, the discharge station (A) of the storage apparatus (2) comprises at least one pusher (33) for discharging products (13) onto at least one conveyor (31), wherein the pusher (33) is disposed such that products (13) can be pushed out approximately horizontally onto each conveyor (31) from a tray (251) to be emptied.

5. The intermediate storage means according to one of Claims 1 to 4, **characterized in that** the inlet station (E) and the discharge station (A) of the storage apparatus (2) are disposed on the same side of the storage apparatus (2).

6. The intermediate storage means according to one of Claims 1 to 5, **characterized in that** both the inlet station (E) and the discharge station (A) of the storage apparatus (2) are disposed on the side of the storage apparatus (2) facing the feed conveyor (10).

7. The intermediate storage means according to one of Claims 1 to 6, **characterized in that** guide means (111,112,113,114) that can be driven by motors are provided for pivoting the feed conveyor section (12) about a pivot axis (1111), and that further guide means (121,122,123,124) that can likewise be driven by motors are provided for extending or shortening the lengthwise-adjustable feed conveyor section (12).

8. The intermediate storage means according to Claim 7, **characterized in that** said means comprises a control system (14) for controlling and/or regulating the guide means (111,112;121,122) that can be driven by motors, said control being based on sensor signals that can be generated by way of sensor means.

9. The intermediate storage means according to one of Claims 1 to 8, **characterized in that** the feed conveyor (10) of the storage means feeder (1) is configured as a single-piece, continuous conveyor belt.

10. The intermediate storage means according to one of Claims 1 to 8, **characterized in that** the inlet station (E) of the storage apparatus (2) is separated from the discharge station (A) of the storage apparatus (2) by at least a distance (a) of two product repositories (251) that are adjacent vertically.

11. A method for operating an intermediate storage means according to one of Claims 1 to 10, **characterized in that** the outlet end (120) of the conveyor section (12) is continuously positioned in the horizontal and vertical direction based on control and/or data signals from the control system (14) by way of guide means (111,112:121,122) that can be driven by motors, said positioning allowing products (13) to be placed onto the other conveyor (31).

12. A method for operating an intermediate storage means according to one of Claims 1 to 10, **characterized in that** the outlet end (120) of the conveyor section (12) is continuously positioned in the horizontal and vertical direction based on control and/or data signals from the control system (14) by way of guide means (111, 111.112;121,122) that can be driven by motors, said positioning allowing products (13) to be placed onto the additional other conveyor (41).

13. A method for operating an intermediate storage means according to one of Claims 1 to 10, **characterized in that** the outlet end (120) of the conveyor section (12) is continuously positioned in the horizontal and vertical direction based on control and/or data signals from the control system (14) by way of guide means (111, 111,112; 121,122) that can be driven by motors, said positioning allowing products (13) to be placed onto at least one product repository (251) of a gondola (25) of the storage apparatus (2).

## Revendications

1. Stockage tampon comportant un dispositif de stockage (2) avec plusieurs emplacements de produits (251) destinés au stockage intermédiaire de produits (13), dans lequel il existe au moins deux boucles de stockage sans fin (24) du dispositif de stockage (2), grâce auxquelles les emplacements de produits (251) peuvent se déplacer entre une station d'entrée (E) pour la réception de produits et une station de sortie (A) pour la reprise des produits (13) stockés temporairement, dans lequel les emplacements de produits (251) sont écartés les uns des autres dans le sens vertical au niveau de la station d'entrée (E) ; et comportant un dispositif d'alimentation du stockage (1) avec un convoyeur d'amenée (10) destiné à transporter des produits (13) dans une direction principale de convoyage (197) entre une extrémité d'entrée (110) pour la réception des produits (13) et une extrémité de sortie (120) pour la remise et le placement des produits (13) dans le dispositif de stockage (2), dans lequel le convoyeur d'amenée (10) comprend une section de convoyeur d'amenée (12) pouvant pivoter verticalement, dans lequel des produits (13) peuvent être amenés à plusieurs emplacements de produits (251) du dispositif de stockage (2) disposés les uns au-dessus des autres,
**caractérisé par le fait**
**que** le stockage tampon comporte un autre convoyeur (31) servant d'emplacement temporaire de produits pour fournir les produits (13) à une machine de transformation implantée en aval de l'autre convoyeur (31) ;
**que** la section de convoyeur d'amenée (12) est réalisée réglable en longueur dans la direction principale de convoyage (197), l'extrémité de sortie (120) de la section de convoyeur d'amenée (12) réglable en longueur et pivotable étant positionnable librement horizontalement et verticalement entre plusieurs emplacements de produits (251) et au moins l'autre convoyeur (31) de telle sorte que des produits (13) peuvent être amenés soit dans les emplacements de produits (251) du dispositif de stockage (2), soit sur l'autre convoyeur (31).

2. Stockage tampon selon la revendication 1, **caractérisé par le fait que** l'autre convoyeur (31) est implanté pour reprendre des produits perpendiculairement à la direction principale de convoyage (197) du convoyeur d'amenée (10) afin d'amener les produits (13) à une machine de transformation implantée en aval de l'autre convoyeur (31), par exemple une machine d'emballage (V).

3. Stockage tampon selon l'une des revendications 1 et 2, **caractérisé par le fait que** le stockage tampon comprend un deuxième autre convoyeur (41) qui est implanté entre le convoyeur d'amenée (10) et le dispositif de stockage (2) afin de reprendre les produits (13) soit du convoyeur d'amenée (10), soit de la station de sortie (A) du dispositif de stockage (2) de telle sorte que les produits (13) peuvent être amenés à une machine de transformation montée en aval du deuxième autre convoyeur (41), par exemple une station de transformation (T).

4. Stockage tampon selon l'une des revendications 1 à 3, **caractérisé par le fait que** le dispositif de stockage (2) comprend au moins une gondole (25) montée mobile sur les deux boucles de stockage (24), chacune des gondoles comprenant plusieurs emplacements de produits prenant la forme de tablettes (251), que les boucles de stockage (24) tournent sans fin autour de poulies de renvoi (22, 23), au moins une poulie de renvoi de chacune des boucles de stockage (24) pouvant être entraînée par moteur, que la station de sortie (A) du dispositif de stockage (2) comporte au moins un coulisseau (33) pour la remise de produits (13) sur au moins un convoyeur (31), le coulisseau (33) étant configuré de manière que des produits (13) puissent être poussés sur chaque convoyeur (31) à partir de l'une des tablettes (251) à vider de manière sensiblement horizontale.

5. Stockage tampon selon l'une des revendications 1 à 4, **caractérisé par le fait que** la station d'entrée (E) et la station de sortie (A) du dispositif de stockage (2) sont disposées du même côté du dispositif de stockage (2).

6. Stockage tampon selon l'une des revendications 1 à 5, **caractérisé par le fait que** non seulement la station d'entrée (E) mais encore la station de sortie (A) du dispositif de stockage (2) sont disposées sur le côté du dispositif de stockage (2) tourné vers le convoyeur d'amenée (10).

7. Stockage tampon selon l'une des revendications 1 à 6, **caractérisé par le fait qu'**il existe des moyens de déflexion (111, 112, 113, 114) pouvant être entraînés par moteur pour faire pivoter la section de convoyeur d'amenée (12) autour d'un axe de pivotement (1111) et qu'il existe en outre des moyens de déflexion (121, 122, 123, 124), pouvant également être entraînés par moteur, pour rallonger ou raccourcir la section de convoyeur d'amenée (12) réglable en longueur.

8. Stockage tampon selon la revendication 7, **caractérisé par le fait que** celui-ci comprend une commande (14) destinée à commander et/ou réguler les moyens de déflexion (111, 112, 113, 114) pouvant être entraînés par moteur en fonction de signaux de détection pouvant être produits par des moyens de détection.

9. Stockage tampon selon l'une des revendications 1 à 8, **caractérisé par le fait que** le convoyeur d'amenée (10) du dispositif d'alimentation du stockage (1) prend la forme d'une bande transporteuse sans fin faite d'une seule pièce.

10. Stockage tampon selon l'une des revendications 1 à 8, **caractérisé par le fait que** la station d'entrée (E) du dispositif de stockage (2) est écartée de la station de sortie (A) du dispositif de stockage (2) d'au moins une distance (a) égale au moins à celle de deux emplacements de produits (251) adjacents verticalement.

11. Procédé de fonctionnement d'un stockage tampon selon l'une des revendications 1 à 10, **caractérisé par le fait que** l'extrémité de sortie (120) de la section de convoyeur d'amenée (12) est positionnée en continu dans la direction horizontale et verticale à l'aide de moyens de déflexion (111, 112 ; 121, 122) pouvant être entraînés par moteur en fonction de signaux de commande et/ou de données de la commande (14), afin de déposer des produits (13) sur l'autre convoyeur (31).

12. Procédé de fonctionnement d'un stockage tampon selon l'une des revendications 1 à 10, **caractérisé par le fait que** l'extrémité de sortie (120) de la section de convoyeur d'amenée (12) est positionnée en continu dans la direction horizontale et verticale à l'aide de moyens de déflexion (111, 112 ; 121, 122) pouvant être entraînés par moteur en fonction de signaux de commande et/ou de données de la commande (14), afin de déposer des produits (13) sur le deuxième autre convoyeur (41).

13. Procédé de fonctionnement d'un stockage tampon selon l'une des revendications 1 à 10, **caractérisé par le fait que** l'extrémité de sortie (120) de la section de convoyeur d'amenée (12) est positionnée en continu dans la direction horizontale et verticale à l'aide de moyens de déflexion (111, 112 ; 121, 122) pouvant être entraînés par moteur en fonction de signaux de commande et/ou de données de la commande (14), afin de déposer des produits (13) sur au moins un emplacement de produit (251) d'une gondole (25) du dispositif de stockage (2).
